Europäisches Patentamt

European Patent Office

Office européen des brevets

(19)

(11) Veröffentlichungsnummer: **0 369 114 B1**

(12) **EUROPÄISCHE PATENTSCHRIFT**

(45) Veröffentlichungstag der Patentschrift:
23.10.91 Patentblatt 91/43

(51) Int. Cl.$^5$: **B23K 35/40, C22C 32/00,**
// C01F17/00

(21) Anmeldenummer: 89113880.2

(22) Anmeldetag: 27.07.89

(54) Verfahren zur Herstellung von legierten Wolframstäben.

(30) Priorität: 17.10.88 DE 3835328

(43) Veröffentlichungstag der Anmeldung:
23.05.90 Patentblatt 90/21

(45) Bekanntmachung des Hinweises auf die
Patenterteilung:
23.10.91 Patentblatt 91/43

(84) Benannte Vertragsstaaten:
AT BE CH DE ES FR GB IT LI NL SE

(56) Entgegenhaltungen:
WO-A-88/05830
CH-A- 463 649
DE-A- 3 701 212

(56) Entgegenhaltungen:
AUTOMATIC WELDING, Nr. 4, April 1964, Seiten 4-7; D.M. RABKIN et al.: "The effects of adding the oxides of certain rare and rare earth metals to tungsten electrodes on their properties"
J. CHEM. SOC. DALTON TRANS., 1984, Seiten 87-91; R. ALVERO et al.: "Lanthanide oxides: Preparation and ageing"

(73) Patentinhaber: GESELLSCHAFT FÜR WOLFRAM-INDUSTRIE MBH
Permaneder Strasse 34
W-8220 Traunstein (DE)

(72) Erfinder: Litty, Richard
Schlossbergstrasse 8
W-8221 Sondermoning (DE)

(74) Vertreter: Reinhard, Skuhra, Weise
Postfach 44 01 51 Friedrichstrasse 31
W-8000 München 40 (DE)

## Beschreibung

Die Erfindung betrifft ein Verfahren zur Herstellung von legierten Wolframstäben, insbesondere von Wolframelektroden für Wolfram-Schutzgasschweißen, -Plasmaschweißen, -Plasmaschmelzschneiden und dergleichen, gemäß dem Oberbegriff des Patentanspruchs 1.

Wolframstäbe mit geringfügigen Zusätzen von Lanthan-, Thorium-, Yttrium-, Zirkon- und Ceroxid sind seit Jahren auf dem Markt, vgl. DIN 32528. Zur Verbesserung der Emissionseigenschaften enthalten Wolframelektroden die vorgenannten oxidischen Zusätze. Am häufigsten werden dabei Thoriumoxidzusätze mit einem Anteil bis zu 4,0 Gew.-% verwendet, weil thorierte Wolframelektroden breit eingesetzt werden können. Aufgrund ihrer im Vergleich zu reinen Wolframelektroden erhöhten Emission haben thorierte Wolframelektroden bessere Zündeigenschaften, größere Lichtbogenstabilität, höhere Strombelastbarkeit und längere Lebensdauer.

Als nachteilig ist bei den vorbekannten Wolframlegierungen mit Thoriumoxid anzusehen, daß sie generell schwer zu bearbeiten sind und einen hohen Energieaufwand für das Sintern erfordern. Thoriumoxid lagert sich an den Korngrenzen des Wolframs an und führt zu einer Rekristallisationshemmung. Man benötigt jedoch eine hohe Rekristallisation für eine weitere Bearbeitung, um z.B. dünne Wolframstäbe zu produzieren.

Der Thoriumoxidanteil ist ferner unerwünscht, weil er Strahlungseigenschaften aufweist. Diese Strahlung ist beispielsweise beim Kernreaktorbau ungünstig, weil damit eine zusätzliche Strahlungsquelle implantiert wird.

Bestrebungen, das Thoriumoxid in legierte Wolframstäben, insbesondere in Wolframelektroden durch einen anderen umweltfreundlicheren Zusatz zu ersetzen, der gleichzeitig Vorteile bei der Herstellung und dem industriellen Einsatz bietet, sind bisher ohne nennenswerten Erfolg gescheitert. Die Verwendung von Lanthanoxidzusätzen, die bei derartigen Wolframelektroden zu einer Verbesserung der Lichtbogenstabilität, zu einem Zünden bei einer niedrigen Spannung und zu einer hohen Standzeit führen könnte, ist bisher in der Praxis nicht über den niedrigen Anteil von etwa 1% hinaus erhöht worden.

Dies liegt einerseits daran, daß unter Berücksichtigung des höheren spezifischen Gewichts von Thoriumoxid gegenüber Lanthanoxid für 1 Volumenteil Thoriumoxid etwa 1,8 Volumenteile Lanthanoxid einzusetzen wären, wobei wegen der rekristallisationshemmenden Wirkung von Lanthanoxid eine Bearbeitung mit Hilfe von Rekristallisation nur mit sehr großem Aufwand durchgeführt werden kann.

Außerdem verringert ein höherer Lanthanoxidanteil die Stabilität von Preßlingen. So kam es bisher bei einem Lanthananteil von etwa 1 Gew.-% dazu, daß der Preßling nach etwa 10 Minuten zerfiel. Dieser Zerfall erfolgt bei 2 Gew.-% Lanthanoxidzusatz etwa nach 2 bis 3 Minuten. Der Zusatz von Lanthanoxid führt somit dazu, daß in dem Preßling erhöhte Spannungen entstehen, die zu einem Zerfallen des Preßlings führen, wobei sich dieser Effekt bei Erhöhung des Lanthanoxidanteils noch verstärkt. Bisherige Bemühungen, in Wolframstäbe, insbesondere in Wolframelektroden, einen höheren Lanthanoxidanteil zu legieren, blieben daher ohne Erfolg.

Die vorgenannten Nachteile gelten auch für ein Verfahren der eingangs genannten Art, das aus der DE-A1-3701212 bekannt ist. Ungünstig ist bei diesem vorbekannten Verfahren zudem die Verwendung von Lanthannitrat, das in einer wäßrigen Lösung verwendet wird und zeit- und energieaufwendig aufbereitet werden muß. Probleme treten zudem aufgrund der homogenen Lanthanverteilung auf, da hier eine Rekristallisationshemmung am Außenumfang des Stabes eintritt, die wiederum die weitere Fertigung erschwert. Für die Praxis ist daher dieses vorbekannte Verfahren vor allem aus wirtschaftlichen Gründen ohne Relevanz.

Der Erfindung liegt die Aufgabe zugrunde ein Verfahren der eingangs genannten Gattung derart weiterzubilden, daß mit möglichst geringem Energieaufwand wolframlegierte Stäbe, insbesondere Wolframelektroden hergestellt werden können, die einen Lanthanoxidanteil von ca. 2 Gewichtsprozent aufweisen.

Erfindungsgemäß wird diese Aufgabe durch die Merkmale des Patentanspruch 1 gelöst.

Bevorzugte Merkmale, die die Erfindung vorteilhaft weiterbilden, sind in den nachgeordneten Patentansprüchen genannt.

Aufgrund des erfindungsgemäßen Verfahrens wird in vorteilhafter Weise erstmalig eine problemlose Integration eines höheren Lanthanoxidanteils als bisher möglich erreicht. Die Zündeigenschaften einer nach dem Verfahren hergestellten Schweißelektrode werden vor allem dahingehend günstig beeinflußt, daß ein Zünden im Vergleich zu thorierten Wolframelektroden bei einer niedrigeren Spannung möglich ist, und daß eine verbesserte Lichtbogenstabilität und vor allem eine hohe Standzeit erreicht werden. Außerdem ist Lanthan kein aktiver Strahler.

Vorteilhaft ist weiterhin, daß die Sintertemperatur der Wolfram-Lanthanoxidlegierung im Vergleich zu der Thoriumoxid-Wolframlegierung mit der Folge herabgesetzt wird, daß weniger Energieaufwand für das Sintern der Lanthanoxid-Wolframlegierung erforderlich ist.

Außerdem bietet das erfindungsgemäße Verfahren den Vorteil, daß man nicht wie bisher stufenweise mit

2

allen Sinteranlagen arbeiten muß, sondern nunmehr fortlaufend Mischen und Pressen und Sintern für jeden Stab durchführen kann. Vorteilhaft kann bei dem erfindungsgemäßen Verfahren entweder das Pressen mit einem mehrphasigen Druckaufbau separat von dem Sintern mit einem mehrphasigen Druckaufbau oder ein Pressen mit gleichzeitigem Vorsintern oder ein heißisostatisches Pressen unter Berücksichtigung des mehrphasigen Druck- und Temperaturaufbaus durchgeführt werden. Aufgrund der durch das erfindungsgemäße Verfahren erreichten Formstabilität des Preßlings ergibt sich zudem eine enorme Flexibilität bei der Herstellung von legierten Wolframstäben, insbesondere von Wolframelektroden mit einem erhöhten Lanthanoxidanteil.

Das Lanthanoxid wird in einem vorbereitenden Verfahrensschritt zur Aufbereitung durch eine volumenvergrößernde Behandlung entspannt. Diese volumenvergrößernde Behandlung erfolgt durch Auslagern bei 25 bis 30°C während mindestens 20 Stunden, wobei danach für die Durchführung des Herstellungsverfahrens das Lanthanoxid mit einer durchschnittlichen Korngröße von 0,5 bis 2 µm zugesetzt wird. Die entspannende volumenvergrößernde Behandlung wird nach einer bevorzugten Ausgestaltung der Erfindung durch ein mehrtägiges dünnschichtiges Halten des Lanthanoxids bei etwa 25 bis 30°C durchgeführt.

Das Pressen der Legierung, das mit einem mehrphasigen Druckaufbau vorgenommen wird, erfolgt vorzugsweise über zwei Haltestufen, wobei bei einer bevorzugten Ausgestaltung der Erfindung die erste Haltestufe etwa im Druckbereich von 900 bis 1100 bar liegt und nach etwa 1,5 bis 2,5 Minuten erreicht und etwa 1 Minute gehalten wird, wobei die zweite Haltestufe etwa im Druckbereich von 1700 bis 1900 bar liegt, etwa 1,5 bis 2,5 Minuten nach der ersten Haltestufe erreicht und etwa 1 Minute gehalten wird, und wobei der maximale Druck von etwa 2200 bar etwa 1,5 bis 2,5 Minuten nach der zweiten Haltestufe erreicht wird. Der maximale Preßdruck wird in vorteilhafter Weise etwa 1 bis 2 Minuten aufrechterhalten.

Der für das Sintern vorgesehene mehrphasige Temperaturaufbau wird in vorteilhafter Weise über zwei Temperaturhaltestufen durchgeführt. Vorzugsweise wird dabei die Temperaturerhöhung derart vorgenommen, daß nach etwa 4 bis 6 Minuten eine erste Haltestufe bei etwa 900 bis 1100°C erreicht und diese etwa 2 bis 4 Minuten gehalten wird, daß die zweite Haltestufe bei etwa 1700 bis 1900°C nach einer weiteren Zeit von etwa 1 bis 3 Minuten erreicht und dann etwa 2 bis 4 Minuten gehalten wird, und daß die maximale Sintertemperatur im Bereich von 2700°C nach weiteren etwa 3 bis 5 Minuten erreicht wird. Die maximale Sintertemperatur wird vorzugsweise etwa 14 bis 16 Minuten aufrechterhalten.

Im anschließenden Beschreibungsteil wird die Erfindung unter Bezugnahme auf die beigefügten Zeichnungen näher erläutert wird. Es zeigen :

Fig. 1    ein Diagramm, das den zeitlichen Verlauf des Preßvorgangs für eine Wolframlegierung darstellt, wobei gestrichelt Wolfram mit 2% Thoriumoxid und mit ausgezogener Linie Wolfram mit 2% Lanthanoxid gezeigt sind ;

Fig. 2    eine graphische Darstellung des Temperaturverlaufs für den Sintervorgang, wobei gestrichelt die Legierung von Wolfram mit 2% Thoriumoxid und mit ausgezogener Linie die Legierung Wolfram mit 2% Lanthanoxid dargestellt sind ;

Fig. 3    einen vergrößerten Schnitt durch einen gepreßten Rohling aus Wolfram mit 2% Thoriumoxid gemäß dem Stand der Technik ;

Fig. 4    einen vergrößerten Schnitt durch einen Sinterstab aus Wolfram mit 2% Thoriumoxid gemäß dem Stand der Technik ;

Fig. 5    einen vergrößerten Schnitt durch einen vorgehämmerten Stab aus Wolfram mit 2% Thoriumoxid gemäß dem Stand der Technik ;

Fig. 6    einen vergrößerten Schnitt durch einen rekristallisierten Stab aus Wolfram mit 2% Thoriumoxid gemäß dem Stand der Technik ;

Fig. 7    einen vergrößerten Schnitt durch einen gepreßten Rohling aus Wolfram mit 2% Lanthanoxid ;

Fig. 8    einen vergrößerten Schnitt durch einen Sinterstab aus Wolfram mit 2% Lanthanoxid ;

Fig. 9    einen vergrößerten Schnitt durch einen vorgehämmerten Stab aus Wolfram mit 2% Lanthanoxid ; und

Fig. 10    einen vergrößerten Schnitt durch einen rekristallisierten Stab aus Wolfram mit 2% Lanthanoxid.

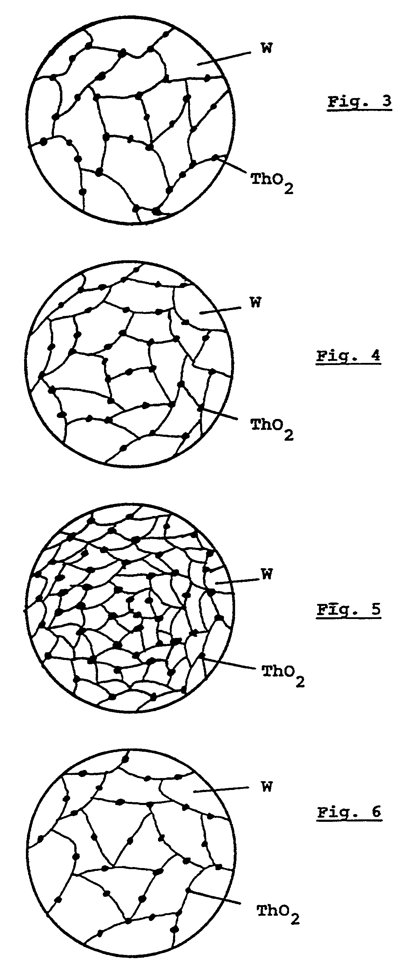

Unter Bezugnahme auf die Fig. 3 bis 6 wird zunächst kurz das bisher bekannte Verfahren zur Herstellung von legierten Wolframstäben, insbesondere von Wolframelektroden mit 2% Thoriumoxidanteil erläutert. Bei der herkömmlichen Legierung werden die Legierungszusätze mit einer durchschnittlichen Korngröße von 1 µm als Oxid dem Wolframmetallpulver zugegeben, wobei die gleichmäßige Verteilung der Zusätze durch einen anschließenden mechanischen Mischvorgang durchgeführt wird. Daran schließt sich ein Preßvorgang an, der entweder hydraulisch mit anschließendem Vorsintern bzw. isostatisch erfolgt, wobei beim isostatischen Pressen ein gerichteter Druckabbau nicht unbedingt erforderlich ist. Fig. 3 zeigt einen vergrößerten Schnitt durch einen gepreßten Rohling, wobei gleichmäßig grobe Wolframkörner W mit homogener Thoriumoxidverteilung ($ThO_2$) erkennbar sind.

Fig. 4 zeigt den Zustand nach dem Sintern. Es liegen nun feinere Wolframkörner W mit nach wie vor gleichmäßiger Einlagerung der $ThO_2$-Partikel an den Korngrenzen vor.

Nach dem nächsten Verfahrensschritt, dem mechanischen Bearbeiten des Sinterstabs, ergibt sich der in Fig. 5 im Schnitt gezeigt vorgehämmerte Stab, bei dem nur noch bedingt bearbeitbares Wolframgefüge mit homogen verteilten $ThO_2$-Partikeln vorliegen. Nach der abschließenden Rekristallisation ergibt sich dann gemäß Fig. 6 ein rekristallisierter Stab, bei dem grobes gut bearbeitbares Wolframgefüge mit gleichmäßiger $ThO_2$-Partikelverteilung vorliegt.

Bei dem erfindungsgemäßen Verfahren zur Herstellung von legierten Wolframstäben, insbesondere von Wolframelektroden, wird vor dem eigentlichen Mischvorgang zunächst ein Aufbereitungsschritt für Lanthanoxid vorgeschaltet. Bei diesem vorgeschalteten Verfahrensschritt erfolgt eine Reinigung von Lanthanoxid mit einer durchschnittlichen Korngröße von 2 bis 2,5 µm mit Hilfe eines engmaschigen Horizontalschwingsiebes, wobei Verunreinigungen und grobe Lanthankörper entfernt werden, so daß das Lanthanoxid mit einer Reinheit von 99,99% vorliegt. Anschließend wird dieses sehr hochreine Lanthanoxid ($La_2O_3$ bzw. andere Oxidationsstufen) mindestens 20 Stunden bei leicht erhöhter Raumtemperatur, etwa 25 bis 30°C, mit einer Anfangsschichtdicke von ca. 2 cm in einem flachen beschichteten Behälter aufgeschüttet. Hierdurch kommt es zu einem sogenannten "Ausarbeiten" des Lanthanoxids, einem Entspannungsvorgang, bei dem die Lanthanoxidkörnchen ihr spezifisches Volumen auf das drei- bis vierfache des Ausgangsvolumens vergrößern und in sehr kleine Teilchen mit einer durchschnittlichen Korngröße von 0,5 µm zerfallen.

Das pulverförmige Wolfram wird nun mit dem hochreinen entspannten Lanthanoxidzusatz von etwa 1,8 bis 2,2 Gew.-%, bezogen auf das Gesamtgewicht, während des Mischvorgangs derart legiert, daß eine äußerst homogene Lanthanverteilung entsteht.

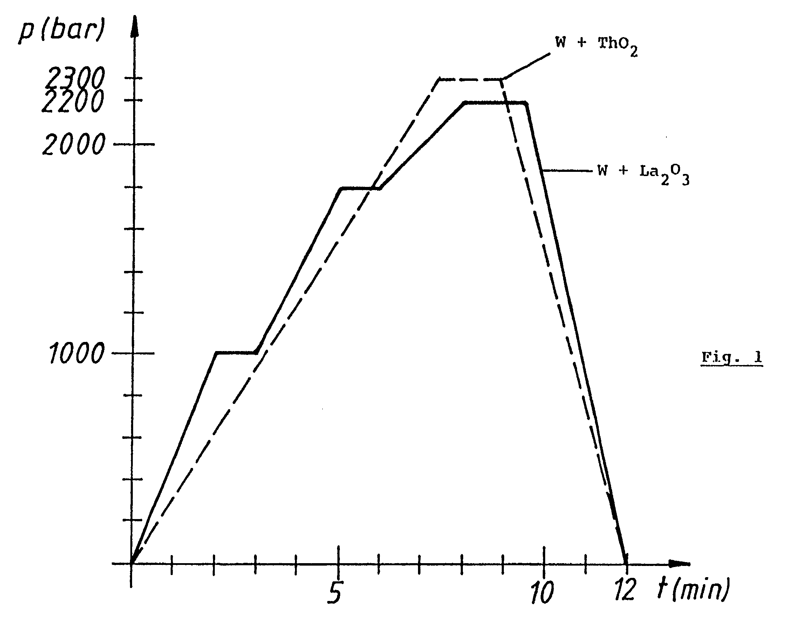

Der nächste Verfahrensschritt, das Pressen, wird erfindungsgemäß mit einem mehrphasigen Druckaufbau vorgenommen, um eine Zerstörung der gepreßten Rohlinge zu vermeiden. Fig. 1 zeigt gestrichelt den zeitlichen Preßvorgang eines thorierten Wolframstabes und mit ausgezogener Linie den Preßvorgang eines Wolframstabes mit 2% Lanthanzusatz. Das Pressen wird isostatisch vorgenommen. Der Druckverlauf beim Pressen von Wolfram mit 2% Lanthanoxid erfolgt bis zur ersten Haltestufe bei etwa 1000 bar vergleichsweise schneller als bei dem thorierten Wolframstab. Die erste Haltestufe liegt gemäß Fig. 1 bei 1000 bar und wird etwa 1 Minute gehalten. Daran schließt sich eine weitere Druckerhöhung über einen Zeitraum von 2 Minuten bis zu einem Druck von 1800 bar an. Bei diesem Druck ist die zweite Haltestufe erreicht, die ebenfalls etwa 1 Minute gehalten wird. Schließlich wird nach weiteren 2 Minuten der maximale Preßdruck von 2200 bar erreicht, der etwa 1,5 Minuten aufrechterhalten wird. Danach erfolgt der Druckabbau ohne Haltestufen. Im Vergleich zu der Druckbehandlung von Wolfram mit 2% Thoriumoxid zeigt Fig. 1, daß der maximale Preßdruck bei Wolfram mit Lanthanoxid etwa 100 bar niedriger liegt, als bei Wolfram mit Thoriumoxid. Diese Verfahrensstufe läßt sich daher bei dem erfindungsgemäßen Verfahren mit einem vergleichsweise niedrigeren Energieaufwand durchführen.

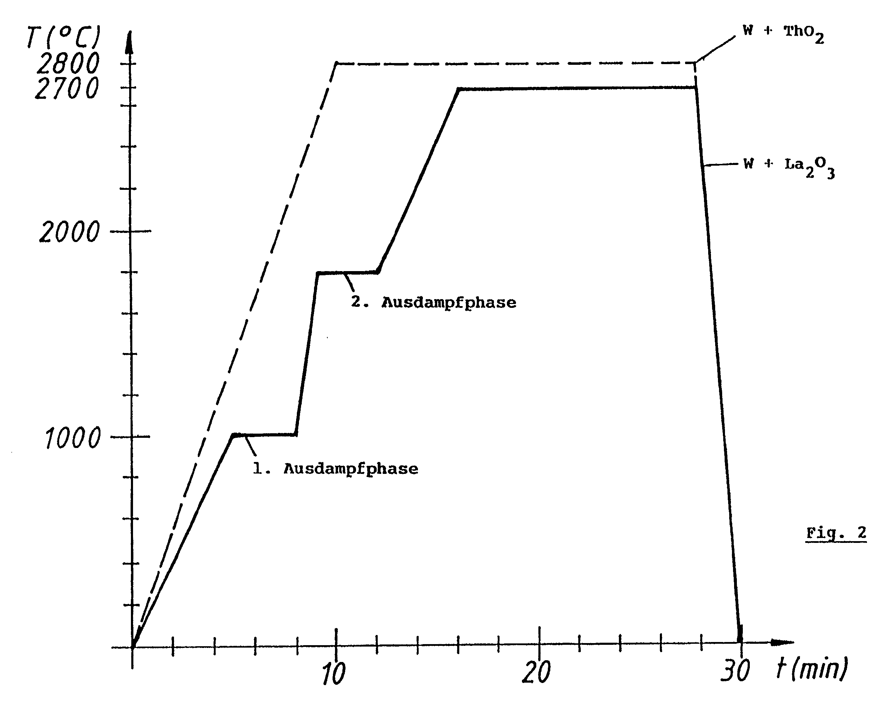

Fig. 2 veranschaulicht ein Sinterschema von Wolfram mit Thoriumoxidoxid (gestrichelt) und von Wolfram mit Lanthanoxid (ausgezogene Linie). Während bei dem thorierten Wolfram eine direkte Temperaturerhöhung bis zu einer maximalen Temperatur von etwa 2800°C vorliegt, erfolgt das Sintern von Wolfram mit Lanthanoxid gemäß der Erfindung über zwei Temperaturhaltestufen. Die erste Temperaturhaltestufe liegt gemäß Fig. 2 bei etwa 1000°C und wird nach 5 Minuten erreicht. Diese erste Temperaturhaltestufe liegt im Bereich des Verdampfungspunktes des Lanthanoxids (erste Ausdampfphase). Daran schließt sich innerhalb einer Zeit von 1 Minute eine Temperaturerhöhung auf ca. 1800° zu einer zweiten Haltestufe (zweite Ausdampfphase) an, die etwa 3 Minuten aufrechterhalten wird. Nach weiteren 4 Minuten wird dann die maximale Sintertemperatur von ca. 2700°C erreicht. Die Sintertemperatur von Wolfram mit Lanthanoxidanteil ist um ca. 100°C niedriger als bei Wolfram mit Thoriumoxidanteil, da mit zunehmendem Legierungsanteil die nötige Sintertemperatur abnimmt. Die niedrigere Sintertemperatur von Wolfram mit Lanthanoxid bedeutet für diesen Verfahrensschritt ebenfalls einen vergleichsweise niedrigeren Energieaufwand.

Mit der erfindungsgemäß durchgeführten Temperaturführung bei dem Sintern wird an den beiden Haltestufen den Durchmesserschwankungen des Preßrohlings hinsichtlich des niedrigsten Durchmesserwertes und des höchsten Durchmesserwertes in vorteilhafter Weise Rechnung getragen. Aufgrund des von innen nach außen verlaufenden Temperaturgradienten bei der üblichen Erhitzung unter Ausnutzung des Widerstandes des Stabes findet im Bereich des kleinsten Durchmessers des Preßrohlings während der ersten Temperaturhaltestufe, der ersten Ausdampfphase, ein Ausdiffundieren eines Teils des Lanthanoxids und gleichzeitig ein Verdampfen aller eingeschlossener Verunreinigungen, z.B. Eisen, Molybdän, Nickel, usw., die einen Gesamtanteil von etwa 0,06 Gew.-% ausmachen, statt. Bei dem zweiten Temperaturhalteabschnitt findet dann ein Ausdiffundieren unter Berücksichtigung des größten Durchmesserbereiches des Preßrohlings statt. Durch die beiden Temperaturhaltestufen wird somit gewährleistet, daß über den gesamten Querschnitt bzw. die gesamte Länge auch bei schwankenden Durchmessergrößen eine homogene Diffusion erfolgt. Durch die erfindungsgemäß vorgesehenen Verdampfungsphasen wird weiterhin in günstiger Weise erreicht, daß am Stabumfang eine Verarmung von Lanthanoxid entsteht. Hierdurch kann bei den nachfolgenden Bearbeitungsgängen eine gerichtete Rekristallisation am Rand des Preßrohlings mit einem wesentlich größeren Kornwachstum erzielt werden. Bei der anschließenden Verformung liegt an der Außenseite des Preßrohlings ein relativ großes leicht verformbares Korn vor, während im Innern des Preßrohlings ein relativ feines Korn existiert. Hierdurch kann eine problemlose Bearbeitung von außen durchgeführt werden.

Die mechanische Bearbeitung erfolgt gemäß der Erfindung durch Hämmern bei einer Temperatur von 1500°C, wobei eine Längung des Stabes und gleichzeitig in vorteilhafter Weise eine Homogenisierung der Korngröße und der Lanthanoxidverteilung in dem Querschnitt des gehämmerten Stabes erfolgt.

Bei dem Hämmern ergibt sich in dem Stab eine Kornverkleinerung, wobeinach der Behandlung ein feines gleichmäßiges Wolframkorn mit einer erhöhten Lanthanoxidkonzentration in der Stabmitte, also eine ungleichmäßige Lanthanoxidverteilung über den Querschnitt des Stabes, vorliegt.

Schließlich wird in einem letzten Verfahrensschritt eine Rekristallisationsbehandlung durchgeführt, bei der der Stab unter Schutzgas, z.B. $H_2$, auf eine Temperatur von etwa 2000°C erhitzt wird. Als Ergebnis der Rekristallisation liegt nun im Außenbereich des Stabes in vorteilhafter Weise ein sehr grobes Korn vor, während im Innern ein feines Korn verbleibt. Mit dieser Maßnahme wird in günstiger Weise der rekristallisationshemmende Effekt von Lanthanoxid im Außenbereich verringert und durch eine gesteuerte Kornverteilung die weitere Bearbeitbarkeit begünstigt.

Der nunmehr vorliegende Stab kann bis auf kleine Enddurchmesser weiterbearbeitet werden, wobei schließlich eine Homogenisierung im Kornaufbau und bei der Lanthanoxidverteilung erreicht wird.

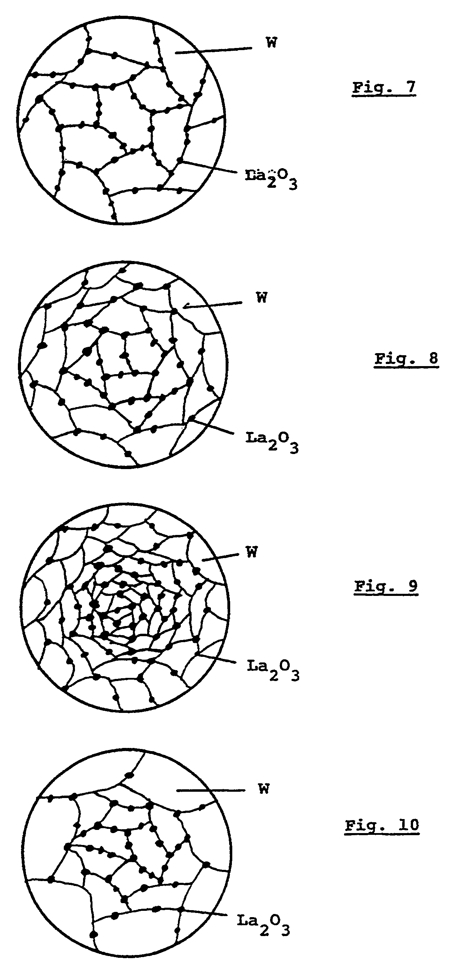

Die verschiedenen Gefügestrukturen bei den verschiedenen Verfahrensstufen werden nun unter Bezugnahme auf die Fig. 7 bis 10 bei Wolfram mit 2% Lanthanoxid näher erläutert.

Fig. 7 zeigt einen gepreßten Rohling aus Wolfram mit 2% Lanthanoxid, bei dem gleichmäßig eine Gruppe Wolframkörner mit homogener Lanthanoxidverteilung vorliegt. Aufgrund des Umstandes, daß das spezifische Gewicht von Lanthanoxid etwa um den Faktor 1,8 niedriger ist als das von Thoriumoxid, ist die Konzentration von Lanthanoxid bei dem gepreßten Rohling wesentlich höher, wie ein direkter Vergleich mit der Fig. 3 zeigt.

Der vergrößerte Schnitt durch den Sinterstab aus Wolfram mit 2% Lanthanoxid gemäß Fig. 8 zeigt etwas gröberes Wolframkorn W am Rand als in der Mitte. Außerdem liegt am Rand durch das Ausdampfen beim Sintern eine Verarmung von $La_2O_3$ vor, um später ein gut verformbares Gefüge zu erhalten. In der Mitte des Sinterstabes ist die Konzentration von $La_2O_3$ größer. Aufschlußreich ist auch hier ein Vergleich mit dem in Fig. 4 gezeigten Sinterstab aus Wolfram mit 2% Thoriumoxid.

In Fig. 9 weist der vergrößerte Schnitt eines vorgehämmerten Stabes am Rand ein grobes Wolframkorn und in der Mitte ein feines Wolframkorn auf. Dies ist darauf zurückzuführen, daß durch die Verarmung von $La_2O_3$ am Rand des Stabes bereits während des Vorhämmerns bei einer Temperatur von 1550°C eine Rekristallisation stattfindet und man so ein gut bearbeitbares Wolframgefüge erhält.

Der in Fig. 10 gezeigte Schnitt durch einen rekristallisierten Stab weist außen ein sehr grobes Korn mit einer Verarmung von $La_2O_3$ am Rand auf. Dieses Gefüge ist außerordentlich gut bearbeitbar und ermöglicht in vorteilhafter Weise auch die Herstellung von sehr kleinen Durchmessern im Bereich von 1,0 mm. Außerdem hat diese Gefügestruktur den Vorteil, daß bei der weiteren Bearbeitung eine Homogenisierung des $La_2O_3$ aufgrund der Verzerrung der Korngrenzen erfolgt.

## Patentansprüche

1. Verfahren zur Herstellung von legierten Wolframstäben, insbesondere von Wolframelektroden für Wolfram-Schutzgasschweißen, -Plasmaschweißen, -Plasmaschmelzschneiden und dergleichen, bei dem pulverförmiges Wolfram mit einem zugemischten Lanthanoxidzusatz gepreßt, gesintert, mechanisch bearbeitet und einer Rekristallisationsbehandlung unterworfen wird, **gekennzeichnet durch,**

Aufbereiten von Lanthanoxid zu einer durchschnittlichen Korngröße von 0,5 bis 2,0 µm durch Auslagern bei 25 bis 30°C während mindestens 20 Stunden ;
Legieren des pulverförmigen Wolframs mit dem aufbereiteten Lanthanoxidzusatz von 1,8 bis 2,2 Gewichtsprozent, bezogen auf das Gesamtgewicht ; und
Pressen mit einem mehrphasigen Druckaufbau und Sintern mit einem mehrphasigen Temperaturaufbau.

2. Verfahren nach Anspruch 1, dadurch gekennzeichnet, daß die volumenvergrößernde Behandlung durch ein mehrtägiges Halten des Lanthanoxids bei 25 bis 30°C durchgeführt wird.

3. Verfahren nach einem der vorangehenden Ansprüche, dadurch gekennzeichnet, daß der mehrphasige Druckaufbau über zwei Haltestufen erfolgt.

4. Verfahren nach Anspruch 3, dadurch gekennzeichnet, daß die Druckerhöhung derart durchgeführt wird, daß die erste Haltestufe im Druckbereich von 900 bis 1100 bar liegt, nach 1,5 bis 2,5 Minuten erreicht und etwa 1 Minute gehalten wird, daß die zweite Haltestufe im Druckbereich von 1700 bis 1900 bar liegt, nach weiteren 1,5 bis 2,5 Minuten erreicht und etwa 1 Minute gehalten wird, und daß der maximale Druck von etwa 2200 bar 1,5 bis 2,5 Minuten nach der zweiten Haltestufe erreicht wird.

5. Verfahren nach einem der vorangehenden Ansprüche, dadurch gekennzeichnet, daß der maximale Preßdruck 1 bis 2 Minuten aufrechterhalten wird.

6. Verfahren nach einem der vorangehenden Ansprüche, dadurch gekennzeichnet, daß der mehrphasige Temperaturaufbau über zwei Temperaturhaltestufen durchgeführt wird.

7. Verfahren nach Anspruch 6, dadurch gekennzeichnet, daß die Temperaturerhöhung derart vorgenommen wird, daß nach 4 bis 6 Minuten eine erste Haltestufe bei 900 bis 1100°C erreicht und diese 2 bis 4 Minuten gehalten wird, daß die zweite Haltestufe bei 1700 bis 1900°C nach weiteren 1 bis 3 Minuten erreicht und dann 2 bis 4 Minuten gehalten wird, und daß die maximale Sintertemperatur im Bereich von 2700°C nach weiteren 3 bis 5 Minuten erreicht wird.

8. Verfahren nach einem der vorangehenden Ansprüche, dadurch gekennzeichnet, daß die maximale Sintertemperatur 14 bis 16 Minuten aufrechterhalten wird.

## Revendications

1. Procédé de fabrication de barres en alliage de tungstène, en particulier d'électrodes en tungstène, pour soudure au tungstène sous gaz protecteur, soudure au tungstène sous plasma, découpe au tungstène par fusion sous plasma et analogues, procédé dans lequel du tungstène pulvérulent, auquel on a mélangé un additif à l'oxyde de lanthane, est comprimé, fritté et travaillé mécaniquement, puis soumis à un traitement de recristallisation, caractérisé en ce

qu'on prépare de l'oxyde de lanthane ayant une grosseur moyenne de grain comprise entre 0,5 et 2 µm en l'exposant en couche à une température comprise entre 25 et 30°C pendant au moins 20 heures ;
qu'on allie le tungstène pulvérulent à l'additif à l'oxyde de lanthane ainsi préparé en concentration de 1,8 à 2,2% du poids total ;
qu'on comprime le tout en augmentant la pression par étapes ; et qu'on fritte en augmentant la température par étapes.

2. Procédé selon la revendication 1, caractérisé en ce qu'on effectue le traitement conduisant à l'augmentation de volume en soumettant, à plusieurs reprises, l'oxyde de lanthane à une température de 25 à 30°C.

3. Procédé selon l'une des revendications précédentes, caractérisé en ce que l'augmentation par étapes de la pression est effectuée avec deux paliers.

4. Procédé selon la revendication 3, caractérisé en ce que l'augmentation de pression est effectuée de telle façon que le premier palier se situe dans l'intervalle de pression de 900 à 1100 bars, est atteint en 1,5 à 2,5 minutes et est maintenu pendant environ 1 minute, que le deuxième palier se situe dans l'intervalle de pression de 1700 à 1900 bars, est atteint après une nouvelle période de 1,5 à 2,5 minutes et est maintenu pendant environ 1 minute et que l'on atteint la pression maximale voisine de 2200 bars de 1,5 à 2,5 minutes après le deuxième palier.

5. Procédé selon l'une des revendications précédentes, caractérisé en ce que la pression maximale est maintenue pendant de 1 à 2 minutes.

6. Procédé selon l'une des revendications précédentes, caractérisé en ce que l'augmentation par étape de la température est réalisée avec deux paliers de température.

7. Procédé selon la revendication 6, caractérisé en ce que l'augmentation de température est réalisée de telle façon que l'on atteint un premier palier compris entre 900 et 1100°C après de 4 à 6 minutes et l'on maintient celui-ci pendant de 2 à 4 minutes, que l'on atteint le deuxième palier compris entre 1700 et 1900°C après une nouvelle période de 1 à 3 minutes et l'on maintient celui-ci pendant de 2 à 4 minutes et que l'on atteint la température de frittage maximale voisine de 2700°C après une nouvelle période de 3 à 5 minutes.

8. Procédé selon l'une des revendications précédentes, caractérisé en ce que la température de frittage maximale est atteinte après de 14 à 16 minutes.

## Claims

1. Method for producing alloyed tungsten rods, in particular tungsten electrodes for tungsten inert gas welding, tungsten plasma welding, tungsten plasma fusion cutting and the like, in which pulverulent tungsten with an admixed lanthanum oxide additive is compacted, sintered, mechanically worked and subjected to a recrystallization treatment, wherein

(a) lanthanum oxide is prepared to an average grain size of 0.5 to 2.0 µm by storing at 25 to 30°C for at least 20 hours,

(b) the pulverulent tungsten is alloyed with the prepared lanthanum oxide additive of 1.8 to 2.2% by weight with respect to the total weight, and wherein

(c) compacting with a multiphase pressure buildup and sintering with a multiphase temperature buildup is performed.

2. Method according to claim 1, wherein the volume-increasing treatment according to step (a) is carried out by keeping the lanthanum oxide at 25 to 30°C for several days.

3. Method according to claim 1, wherein the multiphase pressure buildup takes place via two maintaining stages.

4. Method according to claim 3, wherein the pressure increase is carried out in such a manner that the first holding or maintaining stage lies in the pressure range from 900 to 1100 bar, is reached after 1.5 to 2.5 minutes and is retained for about 1 minute, that the second maintaining stage lies in the pressure range of 1700 to 1900 bar, is reached after a further 1.5 to 2.5 minutes and is retained for about 1 minute and that the maximum pressure of about 2200 bar is reached 1.5 to 2.5 minutes after the second maintaining stage.

5. Method according to claim 4, wherein the maximum compacting pressure is maintained for 1 to 2 minutes.

6. Method according to claim 1, wherein the multiphase temperature buildup is carried out via two temperature maintaining stages.

7. Method according to claim 6, characterized in that the temperature increase is carried out in such a manner that after 4 to 6 minutes a first maintaining stage is reached at 900 to 1100°C and that said stage is retained for 2 to 4 minutes, that the second maintaining stage at 1700 to 1900°C is reached after a further 1 to 3 minutes and then retained for 2 to 4 minutes and that the maximum sintering temperature in the region of 2700°C is reached after a further 3 to 5 minutes.

8. Method according to claim 7, wherein the maximum sintering temperature is maintained for 14 to 16 minutes.

Fig. 1

Fig. 2

W

ThO$_2$

Fig. 3

W

Fig. 4

ThO$_2$

W

Fig. 5

ThO$_2$

W

Fig. 6

ThO$_2$

Fig. 7

Fig. 8

Fig. 9

Fig. 10